**Europäisches Patentamt**

**European Patent Office**

**Office européen des brevets**

(19)

(11) Veröffentlichungsnummer: **0 052 297**
**B1**

(12) **EUROPÄISCHE PATENTSCHRIFT**

(45) Veröffentlichungstag der Patentschrift:
**05.12.84**

(21) Anmeldenummer: **81109432.5**

(22) Anmeldetag: **30.10.81**

(51) Int. Cl.³: **A 01 B 45/00**

(54) Vorrichtung zum Einstanzen von Perforationslöchern in Rasenflächen und zum Einbringen von Zuchtrasengräsern.

(30) Priorität: **19.11.80 DE 3043696**

(43) Veröffentlichungstag der Anmeldung:
**26.05.82 Patentblatt 82/21**

(45) Bekanntmachung des Hinweises auf die Patenterteilung:
**05.12.84 Patentblatt 84/49**

(84) Benannte Vertragsstaaten:
**AT BE CH FR GB IT LI NL**

(56) Entgegenhaltungen:
**DE - A - 2 608 074**
**DE - A - 2 628 548**
**DE - B - 2 608 074**
**US - A - 3 175 523**
**US - A - 3 175 524**
**US - A - 3 463 100**

(73) Patentinhaber: **Wolf-Geräte GmbH, Gregor-Wolf-Strasse Postfach 860 und 880, D-5240 Betzdorf/Sieg (DE)**

(72) Erfinder: **Orth, Günter, Kapellenweg 19, D-5241 Birken (DE)**

(74) Vertreter: **Koch, Günther, Dipl.-Ing. et al, Kaufingerstrasse 8, D-8000 München 2 (DE)**

## Beschreibung

Die Erfindung bezieht sich auf eine fahrbare Vorrichtung zum Einstanzen von Perforationslöchern in Rasenflächen und zum Einbringen von Zuchtrasengräsern in die gestanzten Löcher, mit Stanzwerkzeugen und in einem vorbestimmten Abstand hinter diesen im Takt arbeitenden Pflanzwerkzeugen, die periodisch angehoben und abgesenkt und um die vorbestimmte Strecke (Lochabstand) vorgefahren werden.

Eine solche Vorrichtung ist aus der DE-A-2628 548 bekannt. Das hierbei benutzte Fahrzeug besitzt einen Intervallantrieb, der über die Räder jeweils um einen Lochabstand vorfährt. In zuvor gestochene Löcher werden mittels eines Druckstössels vorgezogene Einzelpflanzen eingeschoben. Der Radantrieb hat den Nachteil, dass insbesondere bei feuchtem Wetter durch Schlupf der Räder auf dem feuchten Erdboden oder Gras sich unterschiedliche Lochabstände ergeben, was zur Folge hat, dass die Zuchtrasengräser nicht in ein zuvor gestanztes Loch eingebracht werden können, sondern daneben auf dem Erdreich abgelegt werden, wo sie später verkümmern, während die gestanzten Löcher frei von Saatgut bleiben.

Der Erfindung liegt daher die Aufgabe zugrunde, eine gattungsgemässe Vorrichtung derart zu verbessern, dass das Saatgut gegebenenfalls zusammen mit Dünger gezielt nur in den eingestanzten Löchern abgelegt wird, während die Oberfläche zwischen den Löchern von Saatgut und Düngemitteln freibleibt.

Gelöst wird die gestellte Aufgabe durch die im Kennzeichnungsteil des Patentanspruches 1 angegebenen Merkmale. Dadurch, dass sich die Vorrichtung an ihren Perforationswerkzeugen voranzieht, während diese im Erdboden verbleiben, wird gewährleistet, dass in jedem Falle der durch den einstellbaren Hub vorbestimmte Vorschubschritt erreicht wird, so dass nach dem folgenden Schritt eine gezielte Ablage des Saatgutes in den Löchern erfolgen kann. Es hat sich gezeigt, dass mit der erfindungsgemässen Maschine in kurzer Zeit beschädigte Rasen- oder Grasnarben zu einem vollen Narbenschluss zurückgeführt werden können. Darüberhinaus lassen sich aber sogar landwirtschaftlich genützte Wiesen, Weiden und Mähweiden relativ kurzfristig und kostengünstig in der Bestandzusammensetzung sowohl im Massenertrag als auch im Futterwert steigern, ohne dass es erforderlich wäre, die Wiesen umzupflügen, wie dies bisher unvermeidbar war.

Ausserdem kann mit der erfindungsgemässen Vorrichtung eine Aussaat von Getreide und anderen Feldfrüchten bewirkt werden, wodurch auch hierfür die Feldbewirtschaftung ohne Umpflügen und ein rationeller Einsatz von Zwischenfrüchten nach Getreide und anderen Kulturen möglich wird.

Zweckmässigerweise sind bei der erfindungsgemässen Vorrichtung jeweils mehrere Einrichtungen mit Stanzwerkzeug und Saatgutspender nebeneinander angeordnet, so dass beim Vorfahren ein relativ breiter Streifen erneuert werden kann.

Durch den Kurbelantrieb gemäss dem Anspruch 3 wird erreicht, dass die Stanzwerkzeuge im wesentlichen senkrecht in den Boden einstechen und aus diesem ausgehoben werden und beim Vorfahren ein sicherer Eingriff im Erdreich erhalten bleibt. Durch Änderung der Kurbelarmlänge lassen sich auf einfachste Weise die Lochabstände verändern.

Eine besonders zweckmässige und einfache Ausgestaltung des Saatgutspenders ergibt sich aus den Ansprüchen 4 und 5.

Weitere zweckmässige Ausgestaltungen der Erfindung ergeben sich aus den Ansprüchen 6 bis 9.

Nachstehend werden Ausführungsbeispiele der Erfindung anhand der Zeichnung beschrieben. In der Zeichnung zeigen:

Figur 1 eine schematische Seitenansicht einer erfindungsgemäss ausgebildeten Vorrichtung

Figur 2 in grösserem Massstab eine Teildarstellung des Antriebssystems für die Schwingarme der Vorrichtung gemäss Figur 1

Figur 3 eine Vorderansicht der Vorrichtung gemäss Figur 1 in grösserem Massstab

Figur 4 das Schwingarmsystem mit einer abgewandelten Ausführungsform des Saatgutspenders

Figur 5 als Einzelheit eine schematische Darstellung der Einstellvorrichtung für den Schwinghub in der Einstellung für minimalen Hub

Figur 6 eine der Figur 5 entsprechende Ansicht der Stelleinrichtung in der Stellung für maximalen Schwinghub und

Figur 7 eine schematische Ansicht des Stellantriebes gemäss Figur 5 und 6 in Richtung der Antriebswelle aus betrachtet.

Die fahrbare Vorrichtung 20 weist ein von Rädern 18 getragenes Fahrgestell 21 mit Führungsgriff 19 und Antriebsmotor 22 auf. Auf in Längsrichtung der Vorrichtung verlaufenden, gegenüber dem Fahrgestell 21 über Gummipuffer 24 abgestützten Längsträgern 26 sind Lager 28 für je eine linke und eine rechte Kurbelwelle 30 angeordnet. Die Kurbelwellen 30 werden über nicht dargestellte Getriebe vom Motor 22 angetrieben. Jede Kurbelwelle trägt zwei Kurbelscheiben 2, die mit um 180° versetzten Kurbelzapfen 3 versehen sind. Diese Kurbelzapfen 3 greifen in Lageraugen 32, die an je einem Schwingarm 1 angebracht sind, die ihrerseits mit ihrem hinteren Ende über einen Gelenkzapfen 34 an einem Lenker 4 angreifen, der seinerseits um eine fahrgestellfeste Achse 36 schwenkbar ist. Am vorderen Ende trägt jeder Schwingarm 1 auswechselbar in einem Träger 38 jeweils zwei als Hohlzinken 5 ausgebildete Stanzwerkzeuge. Durch Drehung der Kurbelscheiben 2 werden die Hohlzinken 5 jeweils abwechselnd in den Boden eingeschlagen und sie verbleiben im Boden, während über die Schwingarme die Vorrichtung bei Weiterdrehung der Kurbelscheiben vorgezogen wird, wobei die Anordnung so getroffen ist, dass jeweils wenigstens ein Zinkenpaar im Eingriff mit dem Boden steht, während das andere Zinkenpaar in angehobener Stellung den Leerhub durchführt, um in die Bereitschaftsstellung überführt zu werden, von der ausgehend neue Perforationslöcher eingestanzt werden. Aufgrund der 180° Versetzung der beiden Kurbelzapfen eines Paares erfolgt gleichzeitig mit dem Einstanzen der Löcher ein Herausheben der Hohlzinken aus den vorher gestanzten Löchern, so dass immer ein formschlüssiger Eingriff mit dem Boden besteht und die relative Lage zu den bereits gestanzten Löchern beibehalten wird.

Die sich so ergebende Zeitphase der abstandsgleichen Übereinstimmung von Stanzpunkt und nachfolgenden Stanzlöchern wird genutzt, um das Saatgut punktgenau in die nachfolgenden Perforationslöcher 6 abzulegen.

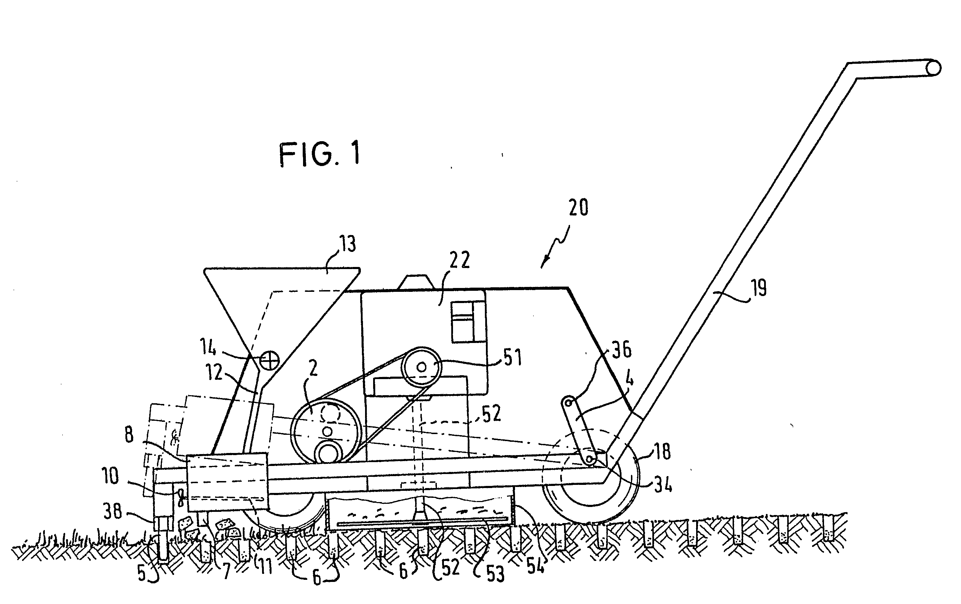

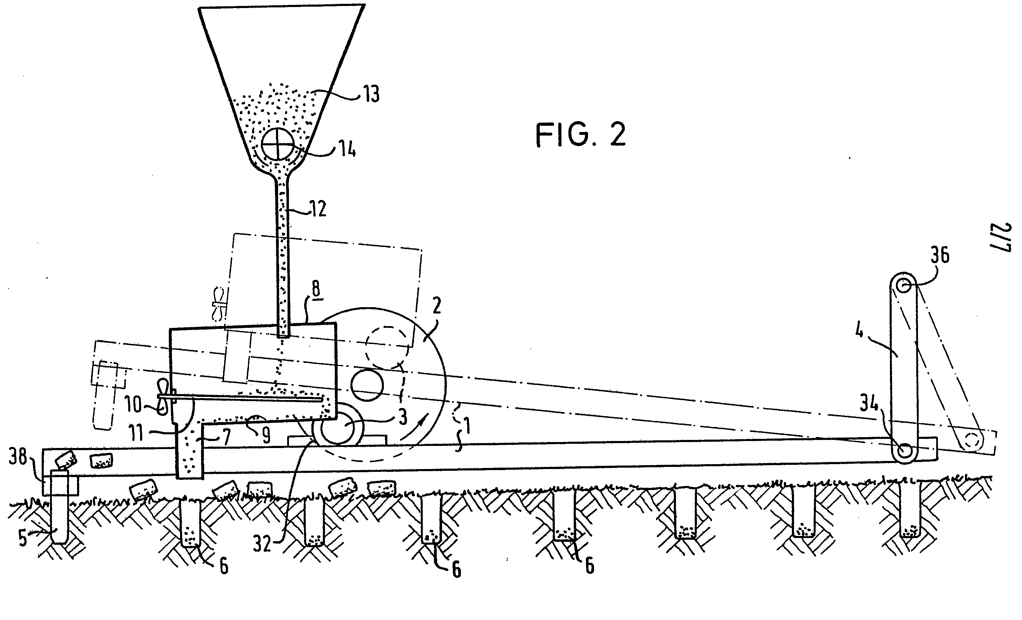

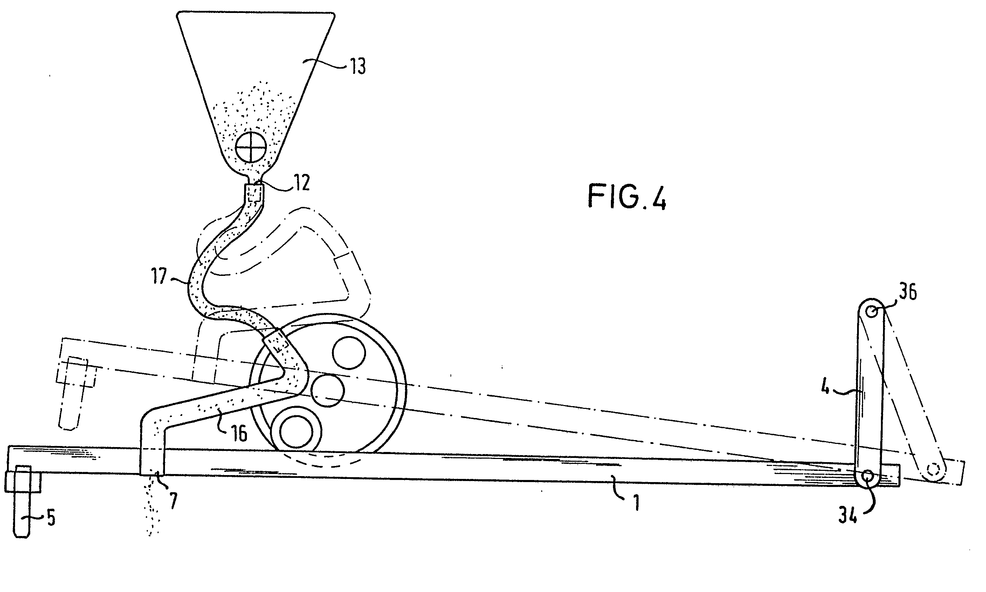

Gemäss dem dargestellten Ausführungsbeispiel ist am Schwingarm 1 im Perforationslochabstand hinter jedem Zinken ein Saatgutspender mit einer Saatröhre 7 angeordnet, deren Auslauf – wie aus den Figuren 1, 2 und 4 ersichtlich – jeweils punktgenau über dem vorher gestanzten Loch 6 zu liegen kommt. Jede Saatröhre 7 wird von einem darüber angeordneten Zerlegeschacht 8 mit Saatgut versorgt. Der Boden 9 des Zerlegeschachts verläuft in Sästellung (Figur 2 und 4 voll ausgezogen dargestellt) in Horizontalrichtung oder in einem vorbestimmten Neigungswinkel zum Schwingarm. Im Abstand über dem Boden des Zerlegeschachtes 8 ist in diesem über eine Flügelschraube 10 in vertikaler und horizontaler Richtung verstellbarer Zwischenboden 11 angeordnet, der die Saatröhre 7 nach oben abdeckt, so dass das Saatgut zwangsläufig den Weg über den Schachtboden 9 beschreiten muss, ehe es über der Öffnung der Saatröhre im freien Fall austreten kann.

Dem Zerlegeschacht 8 wird das Saatgut mengendosiert über ein Fallrohr 12 aus einem Saatgut-Vorratsbehälter 13 über eine herkömmliche Dosierwelle 14 zugeführt.

Das Fallrohr 12 des fahrzeugfesten Saatgutvorratsbehälters 13 kann, wie aus Figur 2 ersichtlich, über dem Schacht 8 münden, oder es kann auch an dieses Fallrohr 12 ein in Figur 2 nicht dargestellter Schlauch anschliessen, der an einer bestimmten Stelle des Schachtes mündet.

Während der Vorfahrbewegung des Saatgutspenders wird der Saatgutzufluss unterbrochen. Dieser Vorgang der Unterbrechung des Saatgutflusses wird dadurch unterstützt, dass der Anstellwinkel des Schwingarmes 1 bzw. des Zerlegeschachtbodens 9 zur Bodenebene bei jeder Drehung der Kurbelscheibe nach vorn und hinten geändert wird. Auf diese Weise wird ein Austreten des Saatgutes bei der Leerhubbewegung nach vorn vermieden.

Bei einem vereinfachten Ausführungsbeispiel gemäss Figur 4 übernimmt ein einfaches Z-förmig gebogenes Rohr 16 die Funktion des Zerlegeschachtes 8, wobei das Fallrohr 12 des Vorratsbehälters 13 über einen Schlauch 17 mit dem Rohr 16 verbunden ist.

Das Austreiben des Saatgutes kann durch pneumatische Beaufschlagung unterstützt werden.

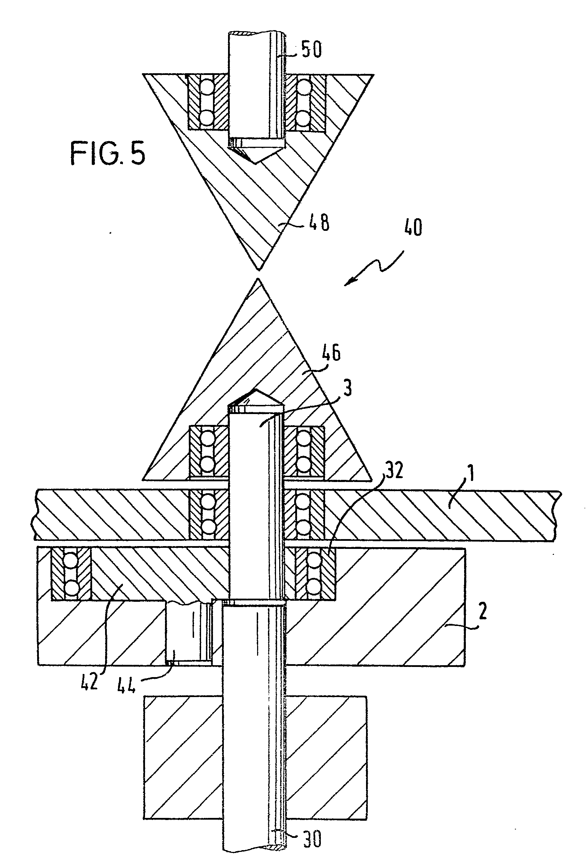

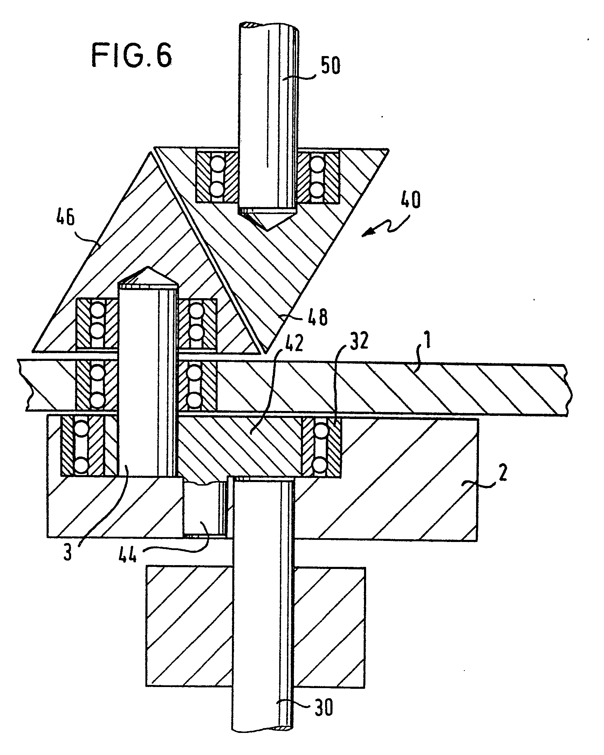

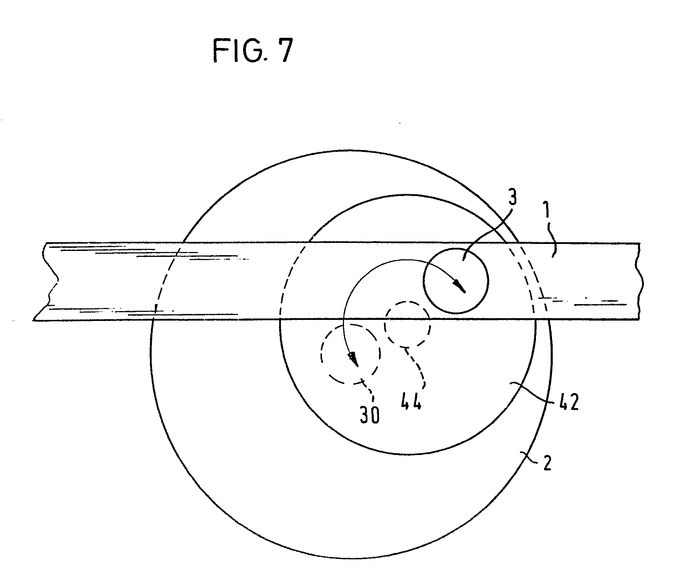

Um die Vorschubbewegung bzw. den Lochabstand zu verändern, ist gemäss einer weiteren Ausgestaltung der Erfindung eine Stellvorrichtung 40 vorgesehen, durch die die Exzentrizität des Schwingarmantriebs bzw. die Länge des Kurbelarmes (radialer Abstand zwischen Kurbelwelle 30 und Kurbelzapfen 3) geändert werden kann. Eine solche Stellvorrichtung ist in Figur 5 bis 7 dargestellt. Hier sitzt der in das Lagerauge 32 des Schwingarmes 1 einstehende Kurbelzapfen auf einer weiteren Kurbelscheibe 42, die um ihre Mittelachse 44 innerhalb einer kreisrunden Ausnehmung der Kurbelscheibe 2 drehbar gelagert ist. Der Kurbelzapfen 3 steht ferner in ein Kegelrad 46 frei drehbar ein, welches als Reibrad ausgebildet ist und mit einem zweiten Kegelreibrad 48 in Reibverbindung gebracht werden kann, welches in Achsrichtung verschieblich drehbar auf einer Achse 50 gelagert ist. Das Kegelrad 48 kann zwischen den beiden Endstellungen gemäss Figur 5 (Leerlaufstellung ohne Hub) und Figur 6 (Vollhubstellung) verschoben werden. Bei dieser Verschiebebewegung aus der Stellung von Figur 5 nach Figur 6 wird das Kegelrad 46 in der Darstellung gemäss Figur 5 nach links verdrängt, wobei der Kurbelzapfen 3 auf einem Kreisbogen wandert, indem sich die Kurbelscheibe 42 in der Ausnehmung dreht. Hierbei kann jede Zwischenstellung zwischen den Endstellungen gemäss Figur 5 und 6 eingestellt werden.

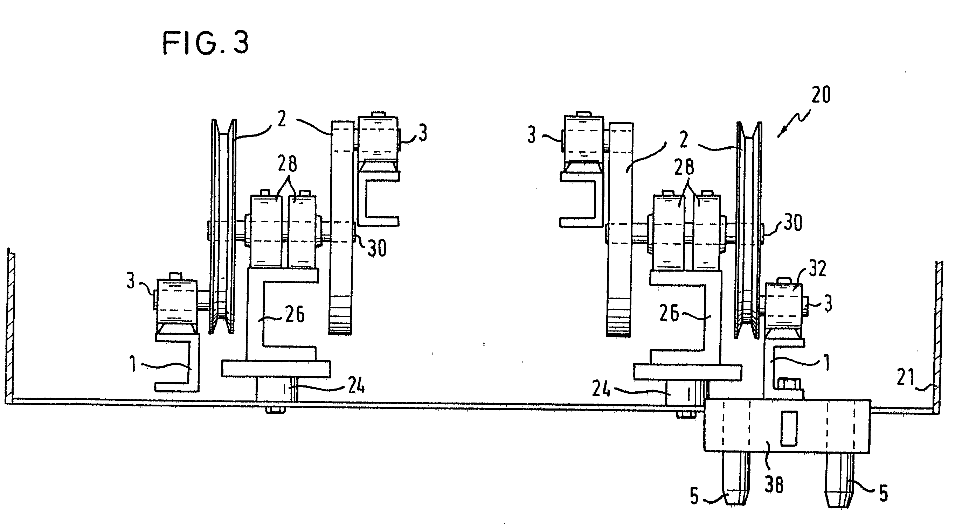

Der Motor 22 treibt über ein Getriebe zwei seitlich im Gehäuse gelagerte Keilriemenscheiben, von denen nur eine in Figur 1 ersichtlich ist. Von diesen Keilriemenscheiben laufen Keilriemen zu den äusseren Kurbelscheiben 2 gemäss Figur 3, die am Umfang mit einer Keilnut versehen sind. Der Motor 22 besitzt eine direkt angetriebene Abtriebswelle 52, die senkrecht nach unten vorsteht und dicht über dem Boden einen Messerbalken 53 trägt, der innerhalb eines Schutzringes 54 umläuft.

Dieser Messerbalken zerkleinert die vom Stanzwerkzeug ausgestanzten Pfropfen und sorgt dafür, dass die bereits mit Samen und gegebenenfalls Dünger angefüllten Löcher mit fein zerkleinerter Erde angefüllt werden.

Gemäss dem dargestellten Ausführungsbeispiel ist über die Einstellung der Kurbelscheibe 42 der Lochabstand und damit auch zugleich die Stanztiefe einstellbar. Es kann jedoch zweckmässig sein, anstelle dieser zwangsläufigen Abhängigkeit auch eine zusätzliche Stellvorrichtung vorzusehen, die es ermöglicht, zusätzlich die Stanztiefe unabhängig von dem eingestellten Lochabstand einzustellen.

Gemäss dem dargestellten Ausführungsbeispiel findet als Antrieb ein Kurbelgetriebe Verwendung, das aufgrund seiner Eigenschaften bei jedem Vorschubvorgang gewisse Beschleunigungen und Verzögerungen bewirkt. Es hat sich jedoch gezeigt, dass hierdurch der Stanzvorgang in günstiger Weise beeinflusst und die Löcher sauber ausgestochen werden. Es soll jedoch vorbehalten bleiben, anstelle des Kurbelgetriebes auch andere kinematische Getriebe vorzusehen, die eine gleichmässige Ablaufgeschwindigkeit gewährleisten.

**Patentansprüche:**

1. Fahrbare Vorrichtung zum Einstanzen von Perforationslöchern (6) in Rasenflächen und zum Einbringen von Zuchtrasengräsern in die gestanzten Löcher, mit Stanzwerkzeugen (5) und in einem vorbestimmten Abstand hinter diesen im Takt arbeitenden Pflanzwerkzeugen (7), die periodisch angehoben und abgesenkt und um die vorbestimmte Strecke (Lochabstand) vorgefahren werden, dadurch gekennzeichnet, dass mehrere aus Stanzwerkzeug (5) und Pflanzwerkzeug in Gestalt eines Saatgutspenders (7) bestehende Einrichtungen vorgesehen sind, von denen wenigstens jeweils zwei Einrichtungen im Gegentakt derart arbeiten, dass ein ständiger Formeingriff der Stanzwerkzeuge (5) und ein definierter Vorfahrschritt gewährleistet ist.

2. Vorrichtung nach Anspruch 1, dadurch gekennzeichnet, dass die aus Stanzwerkzeug (5) und Saatgutspender (7) bestehenden Einrichtungen in Fahrtrichtung nebeneinander angeordnet sind.

3. Vorrichtung nach den Ansprüchen 1 und 2, dadurch gekennzeichnet, dass die Werkzeuge jeder Einrichtung von einem Schwingarm (1) getragen sind, der über einen Kurbelbetrieb (2, 3) antreibbar ist und am hinteren Ende über einen Lenker (4) an einer fahrzeugfesten Achse (36) aufgehängt ist, und dass auf einer Kurbelwelle (30) zwei Kurbelscheiben (2) mit um 180° versetzten Kurbelzapfen (3) angeordnet sind, die die Stanzwerkzeuge (5) bzw. den Saatgutspender (7) tragen.

4. Vorrichtung nach einem der Ansprüche 1 bis 3, dadurch gekennzeichnet, dass jeder Saatgutspender (7) an einen Zerlegeschacht (8) anschliesst, der über eine Dosiervorrichtung (14) gespeist wird, dass der Zerlegeschacht (8) einen einstellbaren Zwischenboden (11) aufweist, der eine vorbestimmte Neigungsstellung gegenüber dem Schwingarm (1) derart aufweist, dass in abgesenkter Stellung eine vorbestimmte Menge Saatgut durch eine Saatröhre des Saatgutspenders (7) ausgegeben wird.

5. Vorrichtung nach Anspruch 4, dadurch gekennzeichnet, dass an das Auslaufrohr (12) des Saatgutbehälters (13) ein Schlauch (17) anschliesst, der mit einem Z-Rohr (16) in Verbindung steht, das an die Saatröhre (7) anschliesst und einen vorbestimmten Neigungswinkel gegenüber dem Schwingarm (1) aufweist.

6. Vorrichtung nach einem der Ansprüche 1 bis 5, dadurch gekennzeichnet, dass den Saatgutförderleitungen ein Druckluftstrom über ein Ventil zugeführt wird, welches periodisch geöffnet wird, während die Stanzwerkzeuge und die Saatgutspender ortsfest am Boden befindlich sind.

7. Vorrichtung nach Anspruch 3, dadurch gekennzeichnet, dass die radiale Länge des Kurbelarmes einstellbar ist, und dass die Kurbelscheiben (2) exzentrisch eine weitere Kurbelscheibe (42) drehbar lagern, die den Kurbelzapfen (3) trägt, und dass die weitere Kurbelscheibe (42) hinsichtlich ihrer Drehstellung in der ersten Kurbelscheibe (2) einstellbar und in jeder Stellung festlegbar ist.

8. Vorrichtung nach Anspruch 7, dadurch gekennzeichnet, dass der Kurbelzapfen (3) drehbar ein Kegelrad (46) trägt, welches mit einem weiteren Kegelrad (48) zusammenwirkt, welches längs seiner Achse verschieblich gelagert ist.

9. Vorrichtung nach einem der Ansprüche 1 bis 8, dadurch gekennzeichnet, dass die vertikale Antriebswelle (52) des Motors (22) einen dicht über dem Boden rotierenden Messerbalken (53) trägt, der die ausgestanzten Erdpfropfen zerkleinert.

**Revendications**

1. Appareil roulant destiné au percement de trous de perforation (6) dans des surfaces de gazon et à la pose de plantes de culture dans les trous percés, à l'aide d'outils de coupe (5) et d'outils de plantage (7) travaillant de façon rythmée à une distance préalablement déterminée à l'arrière des outils de coupe, outils de plantage qui sont périodiquement soulevés et abaissés et qui sont avancés de la distance déterminée (distance entre trous), l'appareil étant caractérisé en ce qu'il comporte plusieurs dispositifs se composant d'un outil de coupe (5) et d'un outil de plantage prévu sous la forme d'un distributeur de produit d'ensemencement (7), dispositifs dont au moins deux travaillent en alternance de telle façon qu'un engagement constant des outils de coupe (5) et un pas d'avancement défini soient assurés.

2. Appareil suivant la revendication 1, caractérisé en ce que les dispositifs se composant d'un outil de coupe (5) et d'un distributeur de produit d'ensemencement (7) sont prévus l'un à côté de l'autre dans le sens du déplacement de l'appareil.

3. Appareil suivant les revendications 1 et 2, caractérisé en ce que les outils de chacun des dispositifs sont portés par un bras oscillant (1) qui peut être commandé par l'intermédiaire d'une commande à manivelle (2, 3) et qui est suspendu à l'extrémité postérieure, par l'intermédiaire d'une bielle (4), à un axe (36) monté fixe sur le véhicule, et en ce que sur un arbre de manivelle (30), il est prévu deux plateaux de manivelle (2) munis de boutons de manivelle (3) décalés de 180°, qui portent respectivement les outils de coupe (5), et les distributeurs de produit d'ensemencement (7).

4. Appareil suivant l'une quelconque des revendications 1 à 3, caractérisé en ce que chaque distributeur de produit d'ensemencement (7) est relié à une caisse de répartition (8) qui est alimentée par l'intermédiaire d'un dispositif de dosage (14), en ce que la caisse de répartition (8) est munie d'un fond intermédiaire réglable (11) qui présente une position d'inclinaison déterminée au préalable par rapport au bras oscillant (1), de telle façon que, pour la position d'abaissement, une quantité déterminée au préalable de produit d'ensemencement soit débitée par un tube à semence du distributeur de produit d'ensemencement (7).

5. Appareil suivant la revendication 4, caractérisé en ce qu'au tube de sortie (12) du réservoir d'emmagasinage de produit d'ensemencement (13) est raccordé un tuyau flexible (17), lui-même relié à un tube en Z (16) qui rejoint le tube à semence (7) et qui présente un angle d'inclinaison préalablement déterminé par rapport au bras oscillant (1).

6. Appareil suivant l'une quelconque des revendications 1 à 5, caractérisé en ce qu'un courant d'air sous pression est amené aux conduits transportant le produit d'ensemencement par une valve qui est ouverte périodiquement, pendant que les outils de coupe et les distributeurs de produit d'ensemencement se trouvent fixes au sol.

7. Appareil suivant la revendication 3, caractérisé en ce que la longueur radiale du bras de manivelle est réglable, en ce que les plateaux de manivelle (2) supportent excentriquement, de façon à en permettre la rotation, un autre plateau de manivelle (42) qui porte le bouton de manivelle (3), et en ce que cet autre plateau de manivelle (42) est réglable en ce qui concerne sa position de rotation dans le premier plateau de manivelle (2) et peut être maintenu dans chacune de ses positions.

8. Appareil suivant la revendication 7, caractérisé en ce que le bouton de manivelle (3) porte, avec possibilité de rotation, une roue conique (46) qui coopère avec une autre roue conique (48) montée de façon à pouvoir se déplacer le long de son axe.

9. Appareil suivant l'une quelconque des revendications 1 à 8, caractérisé en ce que l'arbre de commande vertical (52) du moteur (22) porte une barre de coupe (53) tournant à faible distance au-dessus du sol, barre de coupe qui fragmente et broie les boudins de terre extraits du sol lors du percement des trous.

## Claims

1. A movable apparatus for punching perforation holes (6) in grassed surfaces and for introducing cultivated lawn grasses into the punched holes, the apparatus having punch tools (5) and cyclically operating planting tools (7) which are arranged at a predetermined distance behind the punch tools, which are periodically raised and lowered and which are advanced by the predetermined distance (hole spacing), characterised in that a plurality of devices are provided each consisting of a punching tool (5) and a planting tool in the form of a seed dispenser (7), of which in each case at least two devices operate in phase opposition in such a way that a continuous form engagement of the punch tools (5) and a defined advance step is ensured.

2. Apparatus in accordance with claim 1, characterised in that the devices consisting of punch tools (5) and seed dispensers (7) are arranged alongside one another in the direction of travel.

3. Apparatus in accordance with claims 1 and 2, characterised in that the tools of each device are carried by a swing arm (1) which can be driven via a crank drive (2, 3) and which is suspended at the rear end via a link (4) from an axle (36) fixed relative to the vehicle; and in that two crank discs (2) are arranged on a crankshaft (30) the crank discs having crank pins (3) arranged with 180° displacement which carry the punch tools (5) and the seed dispensers (7) respectively.

4. Apparatus in accordance with one of the claims 1 to 3, characterised in that each seed dispenser (7) follows a separating shaft (8) which is fed via a dispensing device (14); and in that the separating shaft (8) has an adjustable intermediate floor (11) which has a predetermined angle of inclination relative to the swing arm (1) such that in the lowered position a predetermined quantity of seed is dispensed through a seed tube of the seed dispenser (7).

5. An apparatus in accordance with claim 4, characterised in that a hose (17) follows the run-out tube (12) of the seed material container (13) and is connected to a Z-tube (16) which is connected to the seed tubes (7) and has a predetermined angle of inclination relative to the swing arm (1).

6. Apparatus in accordance with one of the claims 1 to 5, characterised in that a stream of compressed air is supplied to the seed conveying lines via a valve which is periodically opened while the punch tools and the seed dispensers are in a fixed location on the ground.

7. An apparatus in accordance with claim 3, characterised in that the radial length of the crank arm is adjustable, and in that the crank discs (2) rotatably support in eccentric manner a further crank disc (42) which carries the crank pin (3), and in that the further crank disc (42) can be adjusted with regard to its rotatable position in the first crank disc (2) and can be secured in any position.

8. Apparatus in accordance with claim 7, characterised in that the crank pin (3) rotatably carries a bevel gear (46) which cooperates with a further bevel gear (48) which is displaceably journalled along its axis.

9. Apparatus in accordance with one of the claims 1 to 8, characterised in that the vertical drive shaft (52) of the motor (22) has a knife beam (53) which rotates close above the ground and which comminutes punched out earth plugs.

FIG. 1

FIG. 2

FIG. 3

FIG.4

0 052 297

13

FIG.5

FIG.6

FIG. 7